# EUROPEAN PATENT SPECIFICATION

(11) **EP 2 990 653 B1**
(45) Date of publication and mention of the grant of the patent: **07.12.2016**
(21) Application number: 15169153.2
(22) Date of filing: 26.05.2015
(51) Int. Cl.: F04D 15/02, F16K 17/08, F16K 17/30

(54) **A DEVICE FOR CONTROLLING A STARTING AND STOPPING OF AN ELECTRIC MOTOR OF A MOTOR-DRIVEN PUMP**
VORRICHTUNG ZUR STEUERUNG DES STARTENS UND STOPPENS EINES ELEKTROMOTORS EINER MOTORGETRIEBENEN PUMPE
DISPOSITIF PERMETTANT DE COMMANDER LE DÉMARRAGE ET L'ARRÊT D'UN MOTEUR ÉLECTRIQUE D'UNE POMPE À MOTEUR

(30) Priority: 29.08.2014 IT VR20140217
(43) Date of publication of application: 02.03.2016
(73) Proprietor: Pedrollo S.p.a., 37047 San Bonifacio (Verona) (IT)
(72) Inventor: PEDROLLO, Silvano, 37100 Verona (IT)
(74) Representative: Lissandrini, Marco

(56) References cited:
- EP-A1- 1 074 745
- EP-A1- 1 775 476
- EP-A2- 0 459 434
- EP-A2- 0 819 851

## Description

The present invention relates to an apparatus for controlling the starting and stopping of an electric motor of a motor-driven pump.

The invention concerns the technical sector of motor-driven pumps configured for collecting and sending fluids, typically liquids, such as for example water, oils and fuels and other liquids for civic or industrial use. In particular, the invention is advantageously applicable in the sector of submersible motor-driven pumps.

An example of the water-submersible electric pump is disclosed, for example, in document WO 2014/042630.

Further examples of the claimed device are also known from EP0459434A, EP1775476A, EP1074745A or EP0819851 A.

Typically, a motor-driven pump comprises a pump body, which houses the electric motor and one or more impellers that collect water from a drawing basin, for example a well, a tank, a tank and the like, for sending to a user device; generally, the impellers are directly keyed on the drive shaft of the electric motor. More in detail, the electric motor is protected by a watertight liner, so as to prevent the electrical parts of the motor from entering into contact with the water. The motor-driven pump further comprises a delivery body connected to the pump body; in greater detail, a delivery conduit is located internally of the delivery body and is in fluid communication with the impellers.

According to the prior art, the motor-driven pumps are provided with an automatic start and stop electronic system for the electric motor, as a function of the request for liquid (for example, water) by the user or as a protection for preventing the "dry" operation of the motor-driven pump, that is to say, the operation of the electric motor in the absence of liquid in the drawing basin.

The electronic automatic start and stop systems comprise an electronic control unit, for example a PLC (Program Logic Control), which controls starting and stopping of the electric motor, as a function of electrical signals coming from a flow rate probe and from a pressure probe. The electronic control unit is housed in a watertight container, for preventing contact between the liquid and the electronic components of the control unit. The flow rate probe is positioned in the delivery conduit so as to be struck by the flow of fluid created by the impellers on request by the user.

The pressure probe has a side directly interfaced with the electronic control unit and a side equipped with a pressure detector configured for entering into contact with the liquid. In particular, the pressure probe is physically coupled to the electronic control unit and faces the delivery conduit via a pressure detector surrounded by a seal gasket, which guarantees the watertight state of the container in which the electronic control unit is housed.

In the prior art, the electronic automatic start and stop systems have some important drawbacks.

Firstly, if the pressure probe breaks, the fluid comes into contact with the components of the electronic control unit, the unit being directly coupled to the pressure probe.

Secondly, maintenance of the electronic system is particularly complex, as it is necessary to access and demount two different probes. Moreover, it is disadvantageously necessary to take special attention in removing the pressure probe, so as to prevent residues of liquid from penetrating inside the watertight container, and coming into contact with the components of the electronic control unit. To access the pressure probe, in fact, it has to be decoupled from the electronic control unit, leaving an opening in the watertight container.

Further, the electronic systems of known type disadvantageously have a complex architecture, which requires a sufficient space for positioning both the probes, with consequent complications at the technical design stage of the electric pump and the dimensions thereof.

In this context, the technical purpose which forms the basis of the invention is to provide an apparatus for controlling starting and stopping of an electric motor of a motor-driven pump, which obviates the above mentioned drawbacks of the prior art. More specifically, the aim of the invention is to provide an apparatus that has no direct physical interface between liquid and electrical/electronic components of the apparatus.

A further aim of the invention is to disclose an apparatus exhibiting a small number of components and a simple architecture.

A further aim of the this invention is to disclose an apparatus for controlling the starting and stopping of an electric motor of a motor-driven pump, which is able to simplify the maintenance and cleaning operations.

Another aim of the invention is to disclose an apparatus for controlling the starting and stopping of an electric motor of a motor-driven pump, able to prevent "dry" operation of the electric pump.

The set technical purpose and the specified aims are substantially attained by an apparatus for controlling the starting and stopping of an electric motor of a motor-driven pump comprising the technical characteristics described in one or more of the appended claims. The dependent claims correspond to further embodiments of a method according to the invention.

Further characteristics and advantages of this invention will become more apparent in the detailed description that follows, with reference to a preferred and non-exclusive embodiment of an electric motor of a motor-driven pump as illustrated in the accompanying drawings, in which:
- figure 1 is a perspective overall view in cross section of a motor-driven pump equipped with an apparatus for controlling starting and stopping of an electric motor, in accordance with the invention;
- figure 2 is a front view of a first embodiment of a component of the apparatus, in accordance with the invention;
- figure 3 shows a front view in cross section of the valve shown in figure 2;

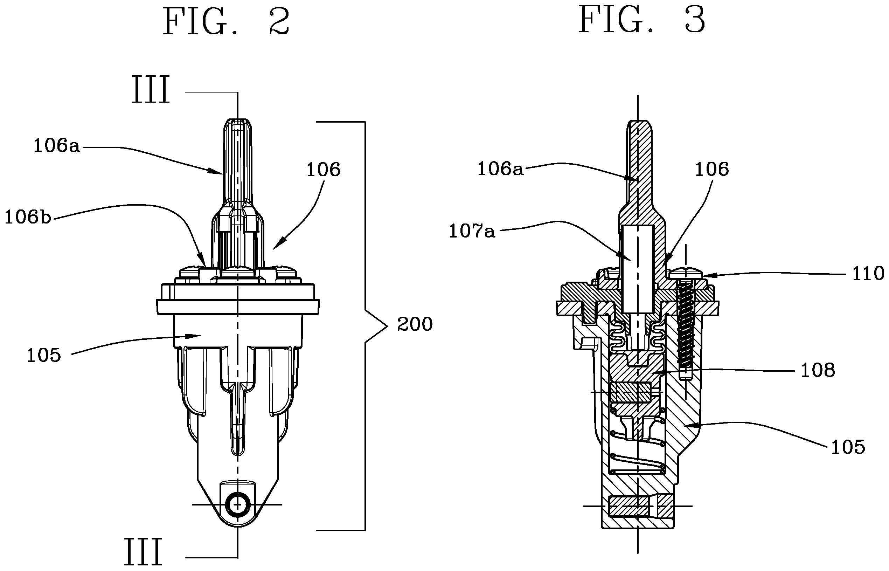

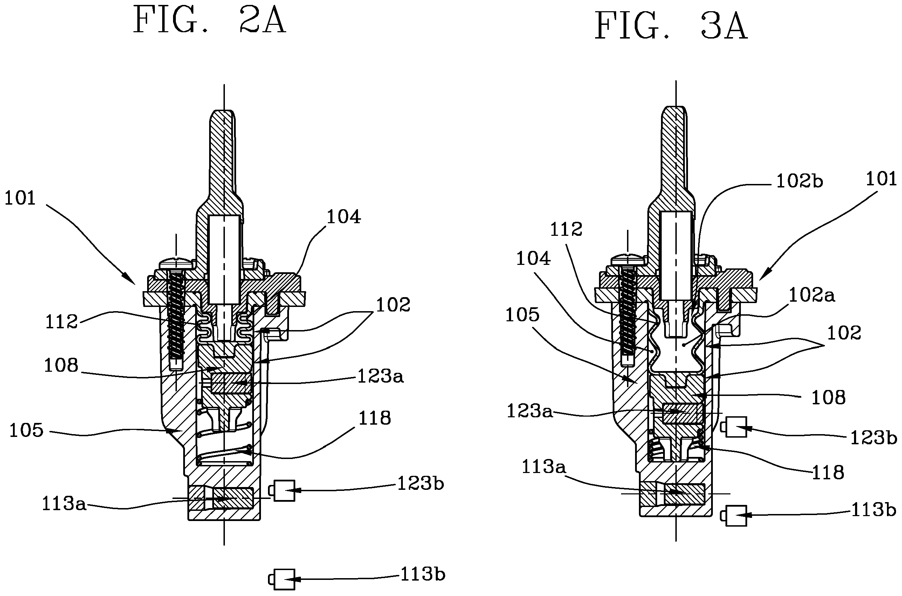

- figures 2A, 3A illustrate the component shown in figures 2 and 3 in two different operating configurations;

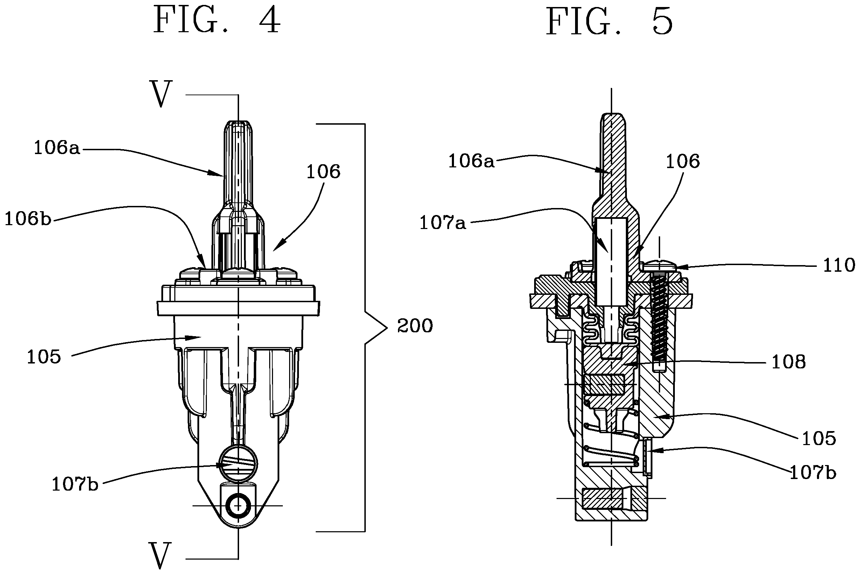

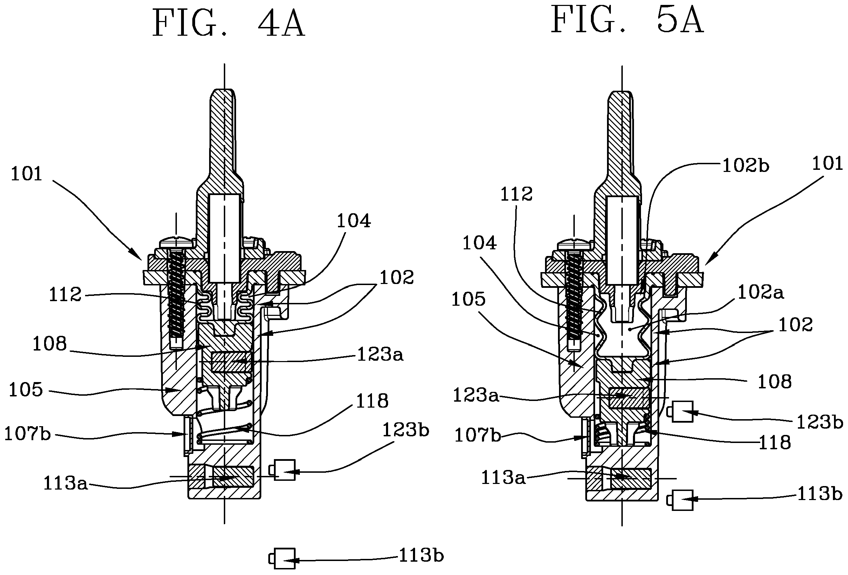

- figure 4 is a front view of a second embodiment of a component of the apparatus, in accordance with the invention;
- figure 5 is a front view in cross section of the component illustrated in figure 4;
- figures 4A, 5A illustrate the component shown in figures 4 and 5 in two different operating configurations;

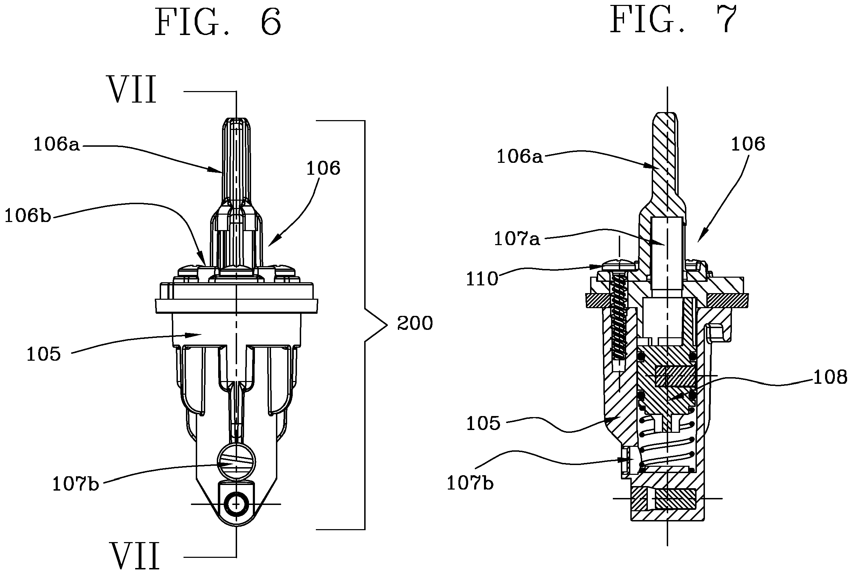

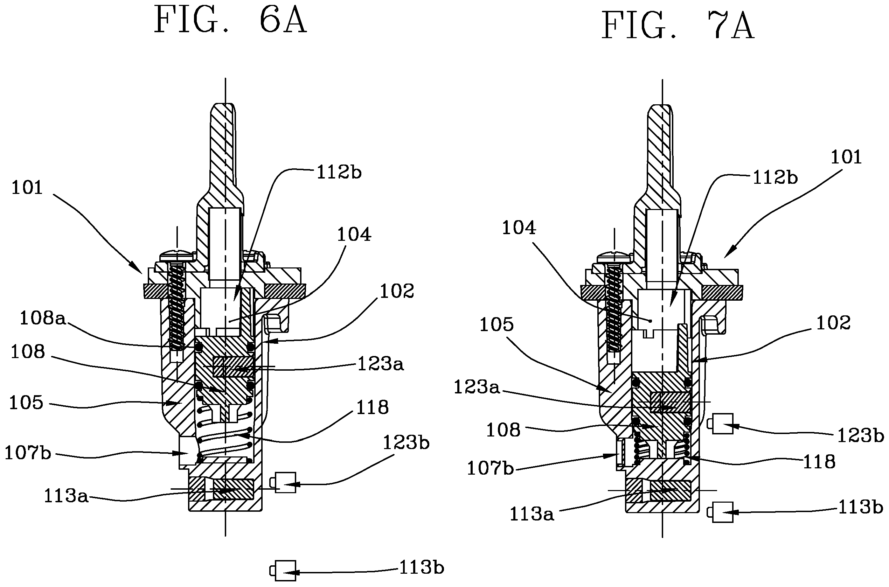

- figure 6 is a front view of a third embodiment of a component of the apparatus, in accordance with the invention;
- figure 7 is a front view in cross section of the component illustrated in figure 6;
- figures 6A, 7A illustrate the component shown in figures 6 and 7 in two different operating configurations.

With reference to the figures, reference numeral 1 indicates in its entirety a motor-driven pump, in particular of a type that is submersible in a liquid, preferably in water.

The motor-driven pump 1 comprises a pump body 2, which houses an electric motor 3 and at least an impeller 4, preferably three or more impellers in the illustrated example, which draws water to be drained from a drawing basin, for example a well, a tank, a tank and the like, for sending to a user. In the illustrated example, but without constituting a limitation, the impellers 4 are directly keyed on a drive shaft 3a of the electric motor 3.

The electric motor 3 is protected by a watertight liner 3b, so as to prevent the electrical parts of the motor from entering into contact with the water.

The motor-driven pump 1 also comprises a delivery body 5 connected to the pump body 2; in more detail, a delivery conduit 5a is located inside the delivery body 5 which is in fluid communication with the impellers 4.

The motor-driven pump 1 is equipped with an apparatus 100 for controlling the starting and stopping of the electric motor 3. In greater detail, the apparatus comprises
a flow rate detector 101 configured such as to be immersed in a fluid and to be movable between a home position, corresponding to the absence of fluid flow condition, and an operating position, corresponding to the presence of a fluid flow;
a pressure detector 102 configured so as to interact with a fluid and movable between at least two positions depending on a pressure applied by the fluid;
- a control apparatus 103 designed to detect a movement of the flow rate detector 101 and a movement of the pressure detector 102; in more detail, the control apparatus commands the starting and stopping of the electric motor 3 depending on the movements detected.

In particular with reference to figures 2A, 3A, 4A, and 5A, the pressure detector 102 is at least partly housed in a chamber 104 made in the flow rate detector 101, in such a way as to form a single integrated flow rate and pressure probe 200 able to be housed in the delivery conduit 5a of the electric pump 1; in more detail, the chamber 104 is configured so as to place the pressure detector 102 in fluid communication with the delivery conduit 5a, as explained in the following of the present description.

With reference in particular to figures 2, 3, 4, 5, 6 and 7 the flow rate detector 101 comprises a containment body 105, internally of which the chamber 104 is fashioned, destined to house the pressure detector 102. Further, a closing element 106 is present, coupled to the containment body 105 for keeping the pressure detector 102 stably housed internally of the chamber 104, the closing element 106 comprising an opening 107a for placing the pressure detector 102 in fluid communication with a delivery conduit 5a of a motor-driven pump 1.

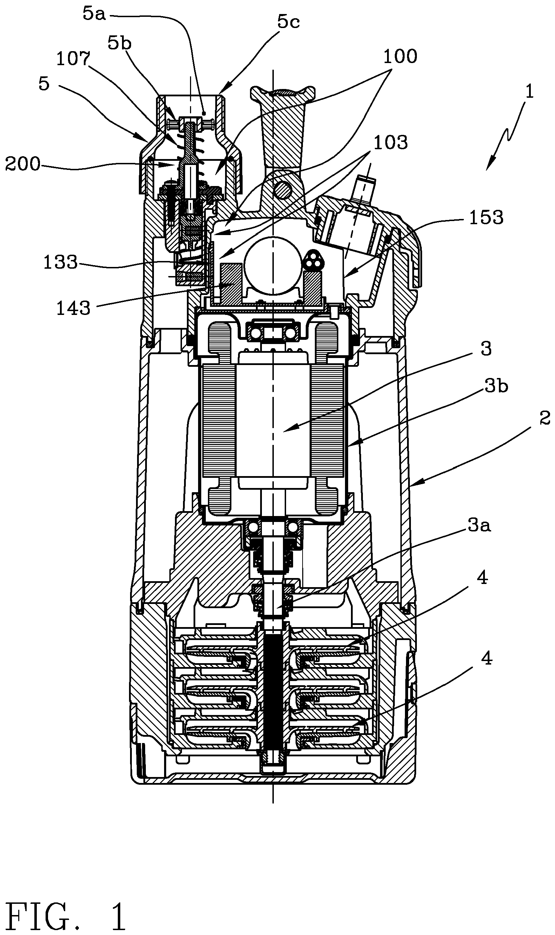

The closing element 106 has an expansion 106a, preferably with a vertical extension, designed to support an elastic element 107 (visible in figure 1), preferably a helical spring. In more detail, the elastic element 107 is inserted coaxially on the expansion 106a so as to act between a base portion 106b of the closing element and a contact portion 5b (visible in figure 1) of the delivery conduit 5a of the motor-driven pump 1, in such a way as to keep or return the integrated probe 200 into the rest position, when the flow rate detector 101 detects no flow, that is to say, when it verifies the absence of the fluid flow condition. The presence of the elastic element 107 advantageously enables the integrated probe 200 also to operate in a horizontal direction.

In accordance with the preferred and illustrated variant embodiment, the containment body 105 and the closing element 106 are connected by reversible fixing means, preferably by three or more screws 110. In accordance with embodiments that are not illustrated, it is possible for the containment body 105 and the closing element 106 to be welded together, for example by ultrasound welding.

With reference in particular to the variant embodiment illustrated in figures 6A and 7A, the pressure detector 102 comprises a slider 108 slidably movable inside the chamber 104 by effect of the pressure applied by the fluid; in more detail, the slider moves between at least a home position (figure 6a), in the absence of fluid pressure, and a switched position (figure 7a), in the presence of fluid pressure. In addition, the slider 108 is equipped with at least a seal ring 108a, for confining the fluid inside the chamber 104.

With reference in particular to the variant embodiment illustrated in figures 2A, 3A, 4A and 5A, the pressure detector may also comprise a membrane 112 forming a cavity 102a for receiving the fluid; in more detail, the membrane 112 deforms under the action of the pressure applied by the fluid and varies its shape between a substantially non-deformed home configuration (figures 2A and 4A), corresponding to the absence of fluid pressure, and a deformed operating configuration (figures 3A and 5A), corresponding to the presence of fluid pressure. In more detail, the slider 108 is maintained in contact with the membrane 112,so that the slider moves by effect of the deformation of the membrane, as a function of the fluid pressure.

With reference in particular to figures 2A-7A, the movement of the slider 8 is preferably opposed by a helical spring 118 inserted in the chamber 104, in such a way as to develop a pre-loading by the effect of a squeezing action designed to position it in stably between a bottom portion of the chamber 104 and a portion of the slider 8.

The control apparatus 103 comprises:
a first signal emitter 113a, preferably for a signal of a magnetic and/or electrical type, associated with the flow rate detector 101;
   - a second signal emitter 123a, preferably for a signal of the magnetic and/or electric type, associated with the pressure detector 102;
   - a processing unit 133 (figure 1) comprising a first sensor 113b designed to receive the signal emitted by the first emitter 113a and a second sensor 123b designed to receive the signal emitted by the second emitter 123a, said sensors 113b, 123b interpreting the signals received as being representative of physical parameters of movement of the flow rate detector 101 and of movement of the pressure detector 102;
   - a control unit 143 (figure 1) for controlling the starting and stopping of an electric motor 3 of a motor-driven pump 1 according to instructions received from the processing unit 133, depending on the signals received by the sensors 113b, 123b. For the sake of simplicity, reference will be made in the following to the first sensor 113b with the term "flow rate sensor", whilst the second sensor 123b will be called the "pressure sensor".

Even more preferably, each of the emitters 113a, 123a of a signal comprises a permanent magnet, whilst each of the sensors 113b, 123b is of the Hall effect type.

With reference to figure 1, the processing unit 133 and the control unit 143 are housed in a box-shaped watertight body 153, which is isolated from the delivery conduit 5a of the motor-driven pump 1; more specifically, the box-shaped body 153 is physically distinct and separated from the integrated flow-rate and pressure probe 200 defined by the flow rate detector 101 and from the pressure detector 102, according to the general architecture described in the foregoing.

In more detail and in accordance with figures, the first signal emitter 113a is fixed on the containment body 105, while the second signal emitter 123a is installed on the slider 108 slidably movable internally of the chamber 104.

In accordance with the variant embodiment illustrated in figures 4, 4A, 5e 5A, the containment body 105 has an opening 107b for fluid communication located on the side opposite an opening 102b (figures 3A, 5A) affording access to the cavity 102a defined by the membrane. More specifically, the opening 107b for fluid communication is afforded at a sliding zone of the slider 108 inside the chamber 104. The communication opening 107b advantageously reduces the pumping effect induced by the motion of the slider 108, significantly increasing the operating precision of the control apparatus.

In accordance with the variant embodiment illustrated in figures 6A and 7A, the containment body 105 has an opening 107b for fluid communication located on the opposite side to an opening 112b affording access to the chamber 104. More specifically, the opening 107b for fluid communication is afforded at a sliding zone of the slider 108 inside the chamber 104. Similarly to what is described with reference to the variant embodiment shown in figures 4, 4A, 5 and 5A, the communication opening 107b advantageously reduces the pumping effect induced by the motion of the slider 108, significantly increasing the operating precision of the control apparatus.

As will become clearer in the detailed description of the operation of the invention, the processing unit 113 is designed in such a way as to perform one or more of the following operations:
- with the electric motor of the motor-driven pump operating, sending the control unit 123 the instruction to keep the electric motor 3 active, at least until the first sensor 113b receives the signal arriving from the first emitter 113a associated with the flow rate detector 101;
- with the electric motor of the motor-driven pump operating, sending the control unit 123 the instruction to stop the electric motor 3 when, respectively, the first sensor 113b receives the signal arriving from the first emitter 113a associated with the flow rate detector 101 and the second sensor 123b receives, within a predetermined period of time, the signal arriving from the second emitter 123a associated with the pressure detector 102;
- with the electric motor of the motor-driven pump switched off, sending the control unit 123 the instruction to switch on the electric motor 3, when the first sensor 113b receives the signal arriving from the first emitter 113a associated with the flow rate detector 101 and the second sensor 123b, after previously having received the signal arriving from the second emitter 123a, no longer receives any signal;
- with the electric motor of the motor-driven pump operating, sending the control unit 123 the instruction to stop the electric motor 3 when, respectively, the first sensor 113b receives the signal arriving from the first emitter 113a associated with the flow rate detector 101 and the second sensor 123b does not receive, within a predetermined period of time, the signal arriving from the second emitter 123a associated with the pressure detector 102, in that configuration, the processing unit 113 preventing a new switching-on of the electric motor for a predetermined subsequent period of time.

In greater detail, the invention operates as follows.

In operating conditions of the with water being dispensing to a user, the impellers 4 set up a continuous flow of fluid (water) which imparts an upwards movement of the integrated probe 200, that is to say, a movement towards an outlet opening 5c of the delivery conduit 5a. In this condition (figures 2A, 4A), the first emitter 113a associated with the flow rate detector 101 distances from the flow rate sensor 113b, which therefore does not receive any signal; the second emitter 123a associated with the pressure detector 102 (the membrane of which is still in the home configuration and thus not deformed) also distances from the pressure sensor 123b, which therefore does not receive any signal. In these conditions, the processing unit sends an instruction to the control unit to keep the electric motor 3 switched on, as it recognises that the user requires water, that there is a flow of liquid and that it is correctly flowing.

When there is a block in the dispensing of the water, typically when the user closes a valve or dispensing stopcock, the flow of fluid (water) stops and the integrated probe 200 returns into the rest configuration corresponding to the home configuration of the flow rate detector 101. In other words, by action of the recall force applied by the elastic element 107, and also the force of gravity (if installed vertically), the integrated probe 200 moves downwards, away from the outlet opening 5c of the delivery conduit 5a. Following closure of the valve or dispensing stopcock, after a certain passage of time a pressure is established in the remaining liquid (water) in the delivery conduit 5a and in the cavity 102a of the membrane of the pressure detector 102 which, as explained in the foregoing, is in fluid communication with the delivery conduit 5a through by means of the access opening 102b and of the opening 107a made on the closing element 106. The pressure of the liquid determines a deformation of the membrane 102, which causes a downwards movement of the slider 108, that is to say, distancingly from the delivery conduit 5a. In this condition (figures 3A, 5A), the first emitter 113a associated with the flow rate detector 101 is positioned at the flow rate sensor 113b, which therefore receives a signal; the second emitter 123a associated with the pressure detector 102 (the membrane of which is in operating configuration and therefore deformed) is positioned, after a predetermined passage of time, at the pressure sensor 123b, which therefore receives a signal. In these conditions, the processing unit sends an instruction to the control unit to switch the electric motor 3 off, as it recognises that the user has blocked dispensing of water and that the flow of liquid in the delivery conduit 5a has therefore stopped. When the user re-opens the valve or the stopcock for activating a new dispensing of liquid (water), there is a pressure drop inside the delivery conduit 5a and therefore in the cavity 102a of the membrane of the pressure detector 102; the drop in pressure of the liquid determines a return of the membrane 102 into the non-deformed home configuration, which causes an upwards movement of the slider 108, i.e. towards the delivery conduit 5a. In this condition (figures 3A, 5A), the first emitter 113a associated with the flow rate detector 101 is positioned at the flow rate sensor 113b, which therefore receives a signal; in the meantime, the second emitter 123a associated with the pressure detector 102 (the membrane of which has returned into the non-deformed home position) distances from the pressure sensor 123b, which therefore does not receive a signal. In these conditions, the processing unit sends an instruction to the control unit to newly switch on the electric motor 3, as it recognises that the user has newly activated the water dispensing and that water is available to be dispensed.

The control apparatus 103 is advantageously able to prevent "dry" operation of the electric pump 1. In fact, in a case where the electric motor 3 is switched on, but there is no fluid flow inside the delivery conduit 5a, the integrated probe 200 does not displace from the rest configuration corresponding to the home configuration of the flow rate detector 101. In these conditions, the first signal emitter 113a is at the flow rate sensor 113b, which therefore receives a signal; in the meantime, the second signal 123a emitter is distanced from the pressure sensor 123b, which therefore does not receive a signal, nor has it received a signal in an immediately-preceding time interval. In these conditions, the processing unit sends an instruction to the control unit to switch off the electric motor 3, as it recognises that no fluid flow has been established, notwithstanding the operating of the motor-driven pump 3, and that there is therefore no availability of liquid to dispense.

In the initial transitory conditions which correspond to the first motor-driven pump connection to the electricity mains, the control apparatus 103 switches on the electric motor 3 and, according to whether the user valve is open or closed, implements the predetermined checks and the adjustments, respectively for the liquid dispensing condition or the blocked dispensing condition, in the above-illustrated way.

The invention offers the following advantages.

First of all, the apparatus for controlling the starting and stopping of the electric motor in accordance with the invention prevents any contact between the fluid and the electronic components of the apparatus, including in the event of failure of any of the flow rate or pressure detectors. The integrated probe 200, in effect, does not have any direct physical interface or other material coupling with the processing unit and the monitoring control unit, unlike in the prior art. In particular, the interaction between the integrated probe 200 and the processing and command unit is achieved only by means of remote interaction, preferably of a magnetic type.

The presence of a single integrated probe 200 for detecting pressure and flow rate advantageously considerably simplifies the architecture of the apparatus for controlling the starting and stopping of the electric motor. Still more advantageously, the presence of a single integrated probe 200 for detecting pressure and flow rate simplifies maintenance and cleaning operations, as an operator has to demount and/or clean one part only.

A further advantage is that pump functioning is guaranteed, even in the presence of faults in the integrated probe 200. In fact, given the high level of integration between the flow rate detector and the pressure detector, in the case of a malfunction the integrated probe can be easily removed without compromising the other pump members, the pump therefore being able to operate as usual; in this case, the control carried out by the integrated probe will be missing, but - in emergency conditions - the delivery of the fluid to a user is advantageously not interrupted, for example supply to an irrigation plant.

It has been found in practice that an apparatus for controlling the starting and stopping of an electric motor of a motor-driven pump, according to the invention, attains the specified aims.

## Claims

1. A device (100) for controlling the starting and stopping of an electric motor (3) of a motor-driven pump (1), said device (100) comprising:
a flow rate detector (101) designed to be immersed in a fluid and to be movable between a home position, corresponding to the absence of fluid flow condition, and an operating position, corresponding to the presence of fluid flow condition;
a pressure detector (102) designed to interact with a fluid and movable between at least two positions depending on a pressure applied by the fluid;
a control apparatus (103) designed to detect a movement of said flow rate detector (101) and a movement of said pressure detector (102), said control apparatus (103) controlling the starting and stopping of an electric motor (3) of a motor-driven pump (1) depending on the movements detected,
**characterised in that** the pressure detector (102) is at least partly housed in a chamber (104) made in the flow rate detector (101) in such a way as to form an integrated flow rate and pressure probe (200) housable in a delivery conduit (5a) of a motor-driven pump (1), said chamber (104) being designed to put the pressure detector (102) in fluid communication with said delivery conduit (5a).

2. The device according to the preceding claim wherein the pressure detector (102) comprises a slider (108) slidably movable inside said chamber (104) due to the pressure applied by the fluid, said slider moving between at least a home position, in the absence of fluid pressure, and a switched position, in the presence of fluid pressure.

3. The device according to claim 2, wherein said slider (108) comprises at least one fluid seal ring (108a) for keeping the fluid inside said chamber (104).

4. The device according to claim 2, wherein the pressure detector (102) comprises a membrane forming a cavity (102a) for receiving the fluid, said membrane deforming under the action of the pressure applied by the fluid and varying its shape between a substantially non-deformed home configuration, corresponding to the absence of fluid pressure, and a deformed operating configuration, corresponding to the presence of fluid pressure, said slider being kept in contact with said membrane, therefore said slider (108) moving due to the deformation of said membrane.

5. The device according to any one of the preceding claims, wherein said control apparatus (103) comprises:
a first signal emitter (113a), preferably for a signal of the magnetic and/or electric type, associated with the flow rate detector (101);
a second signal emitter (123a), preferably for a signal of the magnetic and/or electric type, associated with the pressure detector (102);
a processing unit (133) comprising a first sensor (113b) designed to receive the signal emitted by the first emitter (113a) and a second sensor (123b) designed to receive the signal emitted by the second emitter (123a), said sensors (113b, 123b) interpreting the signals received as being representative of physical parameters of movement of the flow rate detector (101) and of movement of the pressure detector (102);
a control unit (143) for controlling the starting and stopping of an electric motor (3) of a motor-driven pump (1) according to instructions received from the processing unit (133), depending on the signals received by said sensors (113b, 123b).

6. The device according to claim 5, wherein said first signal emitter (113a) is fixed on a containment body (105) of the flow rate detector (101) and said second signal emitter (123a) is installed on said slider (108)

7. The device according to any one of the preceding claims, wherein the flow rate detector (101) comprises:
a containment body (105) in which said chamber (104) is made for housing the pressure detector (102);
a closing element (106) coupled to the containment body (105) for keeping the pressure detector (102) stably housed in said chamber (104), the closing element (106) comprising an opening (107a) for putting the pressure detector (102) in fluid communication with a delivery conduit (5a) of a motor-driven pump (1);
an elastic return element (107) fitted on an extension (106a) of the closing element (106) and acting between a portion (106b) of said closing element (106) and a portion (5b) of a delivery conduit (5a) of a motor-driven pump (1), for keeping or returning the integrated probe (200) into the home position, when the fluid flow is absent.

8. The device according to claim 7, wherein the containment body (105) and the closing element (106) are connected by reversible fixing means, preferably by at least one screw (110).

9. The device according to claim 7, when it depends on claim 2, wherein the containment body (105) comprises a fluid communication opening (107b) located on the opposite side to an access opening (112b) of said chamber (104), said fluid communication opening (107b) being made at a sliding zone of said slider (108) inside the chamber (104).

10. The device according to claim 7, when it depends on claim 4, wherein the containment body (105) comprises a fluid communication opening (107b) located on the opposite side to an access opening (102b) of the cavity (104) formed by the membrane, said fluid communication opening (107b) being made at a sliding zone of said slider (108) inside the chamber (104).

11. The device according to claim 5 or 6, wherein each of said signal emitters (113a, 123a) comprises a permanent magnet.

12. The device according to claim 5 or 6, wherein each of said sensors (113b, 123b) is of the Hall effect type.

13. The device according to any one of claims 5 to 12, wherein said processing unit (133) is designed in such a way that it performs one or more of the following operations:
- with the electric motor (3) of a motor-driven pump (1) operating, sending the control unit (123) the instruction to keep the electric motor (3) active, at least until the first sensor (113b) receives the signal arriving from the first emitter (113a) associated with the flow rate detector (101);
- with the electric motor (3) of a motor-driven pump (1) operating, sending the control unit (123) the instruction to stop the electric motor (3) when, respectively, the first sensor (113b) receives the signal arriving from the first emitter (113a) associated with the flow rate detector (101) and the second sensor (123b) receives, within a preset period of time, the signal arriving from the second emitter (123a) associated with the pressure detector (102);
- with the electric motor (3) of a motor-driven pump (1) switched off, sending the control unit (123) the instruction to switch on the electric motor (3), when the first sensor (113b) receives the signal arriving from the first emitter (113a) associated with the flow rate detector (101) and the second sensor (123b), after previously having received the signal arriving from the second emitter (123a), no longer receives any signal;
- with the electric motor (3) of a motor-driven pump (1) operating, sending the control unit (123) the instruction to stop the electric motor (3) when, respectively, the first sensor (113b) receives the signal arriving from the first emitter (113a) associated with the flow rate detector (101) and the second sensor (123b) does not receive, within a preset period of time, the signal arriving from the second emitter (123a) associated with the pressure detector (102), in that configuration, the processing unit (113) preventing a new switch on of the electric motor for a predetermined subsequent period of time.

14. The device according to any one of claims 5 to 13, wherein said processing unit (133) and said control unit (143) are housed in a fluid-tight box-shaped body (153), isolated from a delivery conduit (5a) of a motor-driven pump (1), said box-shaped body (153) being physically separate from said integrated flow rate and pressure probe (200).

15. A motor-driven pump (1) with an electric motor, **characterised in that** it comprises a device (100) for controlling the starting and stopping of the electric motor (3), according to any one of the preceding claims.

## Patentansprüche

1. Vorrichtung (100) zur Steuerung des Startens und Stoppens eines Elektromotors (3) einer motorgetriebenen Pumpe (1), umfassend:
einen Durchflussmengendetektor (101), der ausgestaltet ist, um in ein Medium eingetaucht und zwischen einer Ausgangsstellung, in der kein Mediumstrom vorliegt, und einer Betriebsstellung, in der Mediumstrom vorliegt, bewegt zu werden;
einen Druckdetektor (102), der ausgestaltet ist, um mit einem Medium zu interagieren und der zwischen mindestens zwei Positionen bewegbar ist, abhängig von einem durch das Medium ausgeübten Druck;
ein Steuergerät (103), das ausgestaltet ist, um eine Bewegung des Durchflussmengendetektors (101) und eine Bewegung des Druckdetektors (102) zu erfassen, wobei das Steuergerät (103) das Starten und Stoppen eines Elektromotors (3) einer motorgetriebenen Pumpe (1) abhängig von den erfassten Bewegungen steuert,
**dadurch gekennzeichnet, dass** der Druckdetektor (102) mindestens teilweise in einer Kammer (104) untergebracht ist, die im Durchflussmengendetektor (101) ausgebildet ist, sodass ein integrierter Durchflussmengen- und Druckfühler (200) gebildet wird, der in einer Speiseleitung (5a) einer motorgetriebenen Pumpe (1) untergebracht werden kann, wobei die Kammer (104) ausgestaltet ist, um den Druckdetektor (102) mit der Speiseleitung (5a) in Fluidkommunikation zu bringen.

2. Vorrichtung nach dem vorhergehenden Anspruch, wobei der Druckdetektor (102) einen Schieber (108) umfasst, der verschiebbar in der Kammer (104) bewegt werden kann aufgrund des durch das Medium ausgeübten Drucks, wobei sich der Schieber mindestens zwischen einer Ausgangsstellung, in der kein Mediumdruck vorliegt, und einer Schaltstellung, in der Mediumdruck vorliegt, bewegt.

3. Vorrichtung nach Anspruch 2, wobei der Schieber (108) mindestens einen Mediumdichtungsring (108a) umfasst, um das Medium in der Kammer (104) zu halten.

4. Vorrichtung nach Anspruch 2, wobei der Druckdetektor (102) eine Membran umfasst, die einen Hohlraum (102a) zur Aufnahme des Mediums bildet, wobei sich diese Membran unter der Wirkung des vom Medium ausgeübten Drucks verformt und ihre Form zwischen einer im Wesentlichen nicht verformten Ausgangskonfiguration, in der kein Mediumdruck vorliegt, und einer verformten Betriebskonfiguration, in der Mediumdruck vorliegt, variiert, wobei der Schieber in Kontakt mit der Membran gehalten wird und sich der Schieber (108) dadurch aufgrund der Verformung der Membran bewegt.

5. Vorrichtung nach einem der vorhergehenden Ansprüche, wobei das Steuergerät (103) umfasst:
einen ersten Signalsender (113a), vorzugsweise für ein Signal vom magnetischen und/oder elektrischen Typ, assoziiert mit dem Durchflussmengendetektor (101);
einen zweiten Signalsender (123a), vorzugsweise für ein Signal vom magnetischen und/oder elektrischen Typ, assoziiert mit dem Druckdetektor (102);
eine Verarbeitungseinheit (133), umfassend einen ersten Sensor (113b), der ausgestaltet ist, um das vom ersten Sender (113a) gesendete Signal zu empfangen, und einen zweiten Sensor (123b), der ausgestaltet ist, um das vom zweiten Sender (123a) gesendete Signal zu empfangen, wobei die Sensoren (113b, 123b) die empfangenen Signale als repräsentativ für physikalische Bewegungsparameter des Durchflussmengendetektors (101) und des Druckdetektors (102) interpretieren;
eine Steuereinheit (143) zur Steuerung des Startens und Stoppens eines Elektromotors (3) einer motorgetriebenen Pumpe (1) nach den von der Verarbeitungseinheit (133) abhängig von den von den Sensoren (113b, 123b) empfangenen Signalen empfangenen Anweisungen.

6. Vorrichtung nach Anspruch 5, wobei der erste Signalsender (113a) auf einem Behälterkörper (105) des Durchflussmengendetektors (101) fixiert ist und der zweite Signalsender (123a) auf dem Schieber (108) montiert ist.

7. Vorrichtung nach einem der vorhergehenden Ansprüche, wobei der Durchflussmengendetektor (101) umfasst:
einen Behälterkörper (105), in dem die Kammer (104) zur Unterbringung des Druckdetektors (102) ausgebildet ist;
ein Verschlusselement (106), das mit dem Behälterkörper (105) gekuppelt ist, um den Druckdetektor (102) stabil in der Kammer (104) untergebracht beizubehalten, wobei das Verschlusselement (106) eine Öffnung (107a) umfasst, um den Druckdetektor (102) mit einer Speiseleitung (5a) einer motorgetriebenen Pumpe (1) in Fluidkommunikation zu setzen;
ein elastisches Rückführungselement (107), das an einer Verlängerung (106a) des Verschlusselements (106) angebracht ist und zwischen einem Abschnitt (106b) des Verschlusselements (106) und einem Abschnitt (5b) einer Speiseleitung (5a) einer motorgetriebenen Pumpe (1) wirkt, um den integrierten Fühler (200) in der Ausgangsstellung beizubehalten oder in diese zurückzuführen, wenn kein Mediumstrom vorliegt.

8. Vorrichtung nach Anspruch 7, wobei der Behälterkörper (105) und das Verschlusselement (106) mittels reversibler Befestigungselemente verbunden sind, vorzugsweise durch mindestens eine Schraube (110).

9. Vorrichtung nach Anspruch 7, wenn dieser von Anspruch 2 abhängt, wobei der Behälterkörper (105) eine Fluidkommunikationsöffnung (107b) umfasst, die auf der einer Zugangsöffnung (112b) der Kammer (104) entgegengesetzten Seite angeordnet ist, wobei die Fluidkommunikationsöffnung (107b) an einer Verschiebungszone des Schiebers (108) in der Kammer (104) ausgebildet ist.

10. Vorrichtung nach Anspruch 7, wenn dieser von Anspruch 4 abhängt, wobei der Behälterkörper (105) eine Fluidkommunikationsöffnung (107b) umfasst, die auf der einer Zugangsöffnung (102b) des durch die Membran gebildeten Hohlraums (104) entgegengesetzten Seite angeordnet ist, wobei die Fluidkommunikationsöffnung (107b) an einer Verschiebungszone des Schiebers (108) in der Kammer (104) ausgebildet ist.

11. Vorrichtung nach Anspruch 5 oder 6, wobei ein jeder der Signalsender (113a, 123a) einen Permanentmagneten umfasst.

12. Vorrichtung nach Anspruch 5 oder 6, wobei ein jeder der Sensoren (113b, 123b) vom Hall-Effekttyp ist.

13. Vorrichtung nach einem der Ansprüche 5 bis 12, wobei die Verarbeitungseinheit (133) so ausgestaltet ist, dass sie einen oder mehrere der folgenden Vorgänge durchführt:
- bei arbeitendem Elektromotor (3) einer motorgetriebenen Pumpe (1) Übermitteln der Anweisung an die Steuereinheit (123), den Betrieb des Elektromotors (3) aufrechtzuerhalten, zumindest bis der erste Sensor (113b) das vom ersten Sender (113a), der mit dem Durchflussmengendetektor (101) assoziiert ist, eingehende Signal empfängt;
- bei arbeitendem Elektromotor (3) einer motorgetriebenen Pumpe (1) Übermitteln der Anweisung an die Steuereinheit (123), den Elektromotor (3) jeweils zu stoppen, wenn der erste Sensor (113b) das vom ersten Sender (113a), der mit dem Durchflussmengendetektor (101) assoziiert ist, eingehende Signal empfängt, und der zweite Sensor (123b) innerhalb eines vorgegebenen Zeitraums das vom zweiten Sender (123a), der mit dem Druckdetektor (102) assoziiert ist, eingehende Signal empfängt;
- bei ausgeschaltetem Elektromotor (3) einer motorgetriebenen Pumpe (1) Übermitteln der Anweisung an die Steuereinheit (123), den Elektromotor (3) einzuschalten, wenn der erste Sensor (113b) das vom ersten Sender (113a), der mit dem Durchflussmengendetektor (101) assoziiert ist, eingehende Signal empfängt, und der zweite Sensor (123b), nachdem er zuvor das vom zweiten Sender (123a) eingehende Signal empfangen hat, kein Signal mehr empfängt;
- bei arbeitendem Elektromotor (3) einer motorgetriebenen Pumpe (1) Übermitteln der Anweisung an die Steuereinheit (123), den Elektromotor (3) jeweils zu stoppen, wenn der erste Sensor (113b) das vom ersten Sender (113a), der mit dem Durchflussmengendetektor (101) assoziiert ist, eingehende Signal empfängt, und der zweite Sensor (123b) innerhalb eines vorgegebenen Zeitraums das vom zweiten Sender (123a), der mit dem Druckdetektor (102) assoziiert ist, eingehende Signal nicht empfängt, wobei die Verarbeitungseinheit (113) in dieser Konfiguration eine neue Einschaltung des Elektromotors für einen vorgegebenen Folgezeitraum verhindert.

14. Vorrichtung nach einem der Ansprüche 5 bis 13, wobei die Verarbeitungseinheit (133) und die Steuereinheit (143) in einem flüssigkeitsdichten kastenförmigen Körper (153) untergebracht sind, der von einer Speiseleitung (5a) einer motorgetriebenen Pumpe (1) isoliert, ist, wobei der kastenförmige Körper (153) physikalisch vom integrierten Durchflussmengen- und Druckfühler (200) getrennt ist.

15. Motorgetriebene Pumpe (1) mit einem Elektromotor, **dadurch gekennzeichnet, dass** sie eine Vorrichtung (100) zur Steuerung des Startens und Stoppens des Elektromotors (3) nach einem der vorhergehenden Ansprüche umfasst.

## Revendications

1. Dispositif (100) permettant de commander le démarrage et l'arrêt d'un moteur électrique (3) d'une pompe à moteur (1), ledit dispositif (100) comprenant :
un détecteur de débit (101) conçu pour être immergé dans un fluide et pour être mobile entre une position initiale, correspondant à la condition d'absence d'écoulement fluidique, et une position fonctionnelle, correspondant à la condition de présence d'écoulement fluidique ;
un détecteur de pression (102) conçu pour interagir avec un fluide et mobile entre au moins deux positions selon une pression appliquée par le fluide ;
un appareil de contrôle (103) conçu pour détecter un déplacement dudit détecteur de débit (101) et un déplacement dudit détecteur de pression (102), ledit appareil de contrôle (103) commandant le démarrage et l'arrêt d'un moteur électrique (3) d'une pompe à moteur (1) selon les déplacements détectés,
**caractérisé en ce que** le détecteur de pression (102) est au moins partiellement logé dans une chambre (104) réalisée dans le détecteur de débit (101) de manière à former une sonde intégrée de débit et de pression (200) pouvant loger dans une conduite de refoulement (5a) d'une pompe à moteur (1), ladite chambre (104) étant conçue pour mettre le détecteur de pression (102) en communication fluidique avec ladite conduite de refoulement (5a).

2. Dispositif selon la revendication précédente, dans lequel le détecteur de pression (102) comprend un coulisseau (108) mobile de façon coulissante à l'intérieur de ladite chambre (104) suite à la pression appliquée par le fluide, ledit coulisseau se déplaçant entre au moins une position initiale, en l'absence de pression du fluide, et une position de commutation, en présence de pression du fluide.

3. Dispositif selon la revendication 2, dans lequel ledit coulisseau (108) comprend au moins une bague d'étanchéité de fluide (108a) pour confiner le fluide à l'intérieur de ladite chambre (104).

4. Dispositif selon la revendication 2, dans lequel le détecteur de pression (102) comprend une membrane formant une cavité (102a) pour recevoir le fluide, ladite membrane se déformant sous l'action de la pression appliquée par le fluide et changeant de forme entre une configuration initiale substantiellement non déformée, correspondant à l'absence de pression du fluide, et une configuration fonctionnelle déformée, correspondant à la présence de pression de fluide, ledit coulisseau étant maintenu en contact avec ladite membrane, par conséquent ledit coulisseau (108) se déplaçant en raison de la déformation de ladite membrane.

5. Dispositif selon l'une quelconque des revendications précédentes, dans lequel ledit appareil de contrôle (103) comprend :
un premier émetteur de signal (113a), de préférence un signal de type magnétique et/ou électrique, associé au détecteur de débit (101) ;
un second émetteur de signal (123a), de préférence un signal de type magnétique et/ou électrique, associé au détecteur de pression (102) ;
une unité de traitement (133) comprenant un premier capteur (113b) conçu pour recevoir le signal émis par le premier émetteur (113a) et un second capteur (123b) conçu pour recevoir le signal émis par le second émetteur (123a), lesdits capteurs (113b, 123b) interprétant les signaux reçus comme étant représentatifs de paramètres physiques du déplacement du détecteur de débit (101) et du déplacement du détecteur de pression (102) ;
une unité de commande (143) pour commander le démarrage et l'arrêt d'un moteur électrique (3) d'une pompe à moteur (1) selon les instructions reçues de l'unité de traitement (133), en fonction des signaux reçus par lesdits capteurs (113b, 123b).

6. Dispositif selon la revendication 5, dans lequel ledit premier émetteur de signal (113a) est fixé sur un corps de confinement (105) du détecteur de débit (101) et ledit second émetteur de signal (123a) est installé sur ledit coulisseau (108).

7. Dispositif selon l'une quelconque des revendications précédentes, dans lequel le détecteur de débit (101) comprend :
un corps de confinement (105) dans lequel ladite chambre (104) est réalisée pour loger le détecteur de pression (102) ;
un élément de fermeture (106) accouplé au corps de confinement (105) pour maintenir le détecteur de pression (102) dans un logement stable dans ladite chambre (104), l'élément de fermeture (106) comprenant une ouverture (107a) pour mettre le détecteur de pression (102) en communication fluidique avec une conduite de refoulement (5a) d'une pompe à moteur (1) ;
un élément de rappel élastique (107), monté sur une extension (106a) de l'élément de fermeture (106) et agissant entre une partie (106b) dudit élément de fermeture (106) et une partie (5b) de la conduite de refoulement (5a) d'une pompe à moteur (1), pour maintenir ou faire revenir la sonde intégrée (200) dans la position initiale lorsque l'écoulement de fluide est absent.

8. Dispositif selon la revendication 7, dans lequel le corps de confinement (105) et l'élément de fermeture (106) sont reliés par des moyens de fixation réversibles, de préférence par au moins une vis (110).

9. Dispositif selon la revendication 7, lorsqu'elle dépend de la revendication 2, dans lequel le corps de confinement (105) comprend une ouverture de communication fluidique (107b) située sur le côté opposé à une ouverture d'accès (112b) de ladite chambre (104), ladite ouverture de communication fluidique (107b) étant réalisée en correspondance d'une zone de coulissement dudit coulisseau (108) à l'intérieur de la chambre (104).

10. Dispositif selon la revendication 7, lorsqu'elle dépend de la revendication 4, dans lequel le corps de confinement (105) comprend une ouverture de communication fluidique (107b) située sur le côté opposé à une ouverture d'accès (102b) de la cavité (104) formée par la membrane, ladite ouverture de communication fluidique (107b) étant réalisée en correspondance d'une zone de coulissement dudit coulisseau (108) à l'intérieur de la chambre (104).

11. Dispositif selon la revendication 5 ou 6, dans lequel chacun desdits émetteurs de signaux (113a, 123a) comprend un aimant permanent.

12. Dispositif selon la revendication 5 ou 6, dans lequel chacun desdits capteurs (113b, 123b) est à effet Hall.

13. Dispositif selon l'une quelconque des revendications de 5 à 12, dans lequel ladite unité de traitement (133) est conçue de manière à ce qu'elle effectue une ou plusieurs des opérations suivantes :
- avec le moteur électrique en fonctionnement (3) d'une pompe à moteur (1), envoyer à l'unité de commande (123) l'instruction de maintenir le moteur électrique (3) en marche, au moins jusqu'à ce que le premier capteur (113b) reçoive le signal provenant du premier émetteur (113a) associé au détecteur de débit (101) ;
- avec le moteur électrique en fonctionnement (3) d'une pompe à moteur (1), envoyer à l'unité de commande (123) l'instruction d'arrêter le moteur électrique (3) lorsque, respectivement, le premier capteur (113b) reçoit le signal parvenant du premier émetteur (113a) associé au détecteur de débit (101) et le second capteur (123b) reçoit, au cours d'une période de temps prédéfinie, le signal provenant du second émetteur (123a) associé au détecteur de pression (102) ;
- avec le moteur électrique éteint (3) d'une pompe à moteur (1), envoyer à l'unité de commande (123) l'instruction d'allumer le moteur électrique (3) lorsque le premier capteur (113b) reçoit le signal provenant du premier émetteur (113a) associé au détecteur de débit (101) et le second capteur (123b) ne reçoit plus aucun signal après avoir précédemment reçu le signal provenant du second émetteur (123a) ;
- avec le moteur électrique en fonctionnement (3) d'une pompe à moteur (1), envoyer à l'unité de commande (123) l'instruction d'arrêter le moteur électrique (3) lorsque, respectivement, le premier capteur (113b) reçoit le signal provenant du premier émetteur (113a) associé au détecteur de débit (101) et le second capteur (123b) ne reçoit pas, au cours d'une période de temps prédéfinie, le signal provenant du second émetteur (123a) associé au détecteur de pression (102) ; dans cette configuration, l'unité de traitement (113) empêchant un nouvel allumage du moteur électrique pendant une période de temps prédéfinie ultérieure.

14. Dispositif selon l'une quelconque des revendications de 5 à 13, dans lequel ladite unité de traitement (133) et ladite unité de commande (143) sont logées dans un corps étanche en forme de boîtier (153), isolé d'une conduite de refoulement (5a) d'une pompe à moteur (1), ledit corps en forme de boîtier (153) étant physiquement séparé de ladite sonde intégrée de débit et de pression (200).

15. Pompe à moteur (1) équipée d'un moteur électrique, **caractérisée en ce qu'**elle comprend un dispositif (100) pour commander le démarrage et l'arrêt du moteur électrique (3), selon l'une quelconque des revendications précédentes.
